(19) Europäisches Patentamt
European Patent Office
Office européen des brevets

(11) **EP 2 192 551 A1**

(12) **DEMANDE DE BREVET EUROPEEN**

(43) Date de publication:
**02.06.2010 Bulletin 2010/22**

(51) Int Cl.:
***G06T 15/10*** *(2006.01)* *G06T 17/40* *(2006.01)*

(21) Numéro de dépôt: **09177394.5**

(22) Date de dépôt: **27.11.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **28.11.2008 FR 0858121**

(71) Demandeur: **Newscape Technology**
**22300 Lannion (FR)**

(72) Inventeurs:
• **Klaine, Luc**
 **22300, LANNION (FR)**
• **Bernard, Mickaël**
 **22300, LANNION (FR)**

(74) Mandataire: **Hassine, Albert**
**Cabinet Plasseraud**
**52 rue de la Victoire**
**75440 Paris Cedex 09 (FR)**

(54) **Affichage numerique d'objets parametres par des polygones bidimensionnels**

(57) Procédé d'affichage numérique sur un écran d'un terminal d'une image représentant un ensemble d'objets, chaque objet étant paramétré au moins par des coordonnées bidimensionnelles de points d'un polygone, le procédé comprenant, pour au moins un point courant du polygone :

a/ calcul (212) d'une aire d'un triangle comportant le point courant et deux points du polygone adjacents audit point courant,

b/ estimation (211) d'un coefficient de proximité à partir des dites coordonnées bidimensionnelles et de paramètres de navigation,

c/ comparaison (213) de l'aire calculée à un seuil, en tenant compte dudit coefficient de proximité,

d/ filtrage pour conserver ou éliminer (216), selon le résultat de la comparaison, ledit point courant pour le calcul d'une représentation (202), destinée à être affichée sur l'écran (203), de l'ensemble d'objets selon les paramètres de navigation.

FIG.3B.

EP 2 192 551 A1

FIG.3C.

**Description**

La présente invention se rapporte au domaine de l'affichage numérique d'objets tridimensionnels ou bidimensionnels paramétrés au moins par des coordonnées bidimensionnelles de points d'un polygone.

L'invention est plus particulièrement adaptée aux applications embarquées, par exemple de cartographie numérique, sur des terminaux mobiles, par exemple des téléphones portables, assistant personnel numérique ou PDA etc. De telles applications sont par exemple mises en oeuvre dans des terminaux mobiles aptes à communiquer avec un serveur.

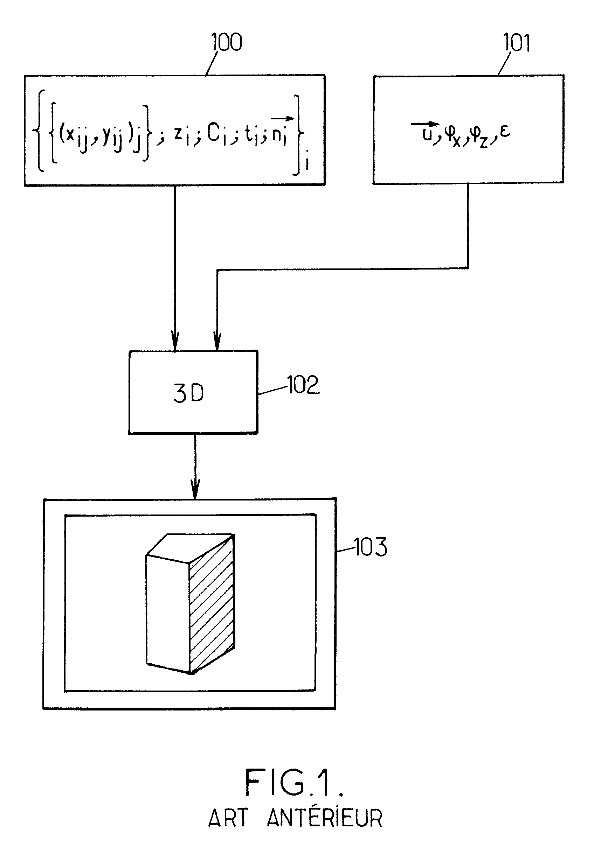

La figure 1 illustre un procédé d'affichage d'objets tridimensionnels, ces objets indicés i représentant par exemple une pluralité d'immeubles respectifs. Ces objets tridimensionnels sont paramétrés par une liste de données d'images. Chaque objet indicé i est considéré comme un cylindre de hauteur $z_i$ et de base un polygone. Pour chaque objet, la liste comporte une valeur de paramètre de hauteur $z_i$, ainsi que les coordonnées 2D des points de la base polygonale $x_{ij}$, $y_{ij}$, j indiçant les points de la base. La liste de données d'image peut en outre comprendre des paramètres de vecteurs normaux $\vec{n}_i$ à des surfaces des objets à représenter, des textures $t_i$, des couleurs $c_i$, ou autre.

Des paramètres de navigation 101 définissant le point de vue selon lequel un utilisateur souhaite voir afficher les objets, sont déterminés à partir de données reçues d'une interface utilisateur.

A partir de la liste des données d'image 100 et des paramètres de navigation souhaités 101, une représentation 3D est calculée lors d'une étape 102, par exemple par un moteur graphique ou moteur 3D.

L'affichage lors d'une étape 103 sur un écran des valeurs de pixels calculées permet ainsi de représenter en deux dimensions les objets tridimensionnels selon les paramètres de navigation souhaités (étape 103).

Les calculs de l'étape 102 sont bien connus de l'homme du métier. La plupart des terminaux comprennent des moyens de calcul du type moteur graphique capables d'effectuer ces calculs.

Les objets à représenter peuvent alternativement être des objets bidimensionnels, paramétrés par des données bidimensionnelles. Les paramètres de navigation peuvent alors définir une position et une échelle par exemple et les calculs de l'étape 102 permettent d'obtenir une représentation 2D.

Toutefois, les écrans ont une taille limitée en nombre de pixels, en particulier les écrans des terminaux mobiles.

Les calculs de l'étape 102 conduisent à des coordonnées exactes de points, et il est nécessaire de traiter les résultats de ces calculs, par exemple en effectuant des arrondis ou des moyennes en vue de l'affichage sur un écran possédant un nombre de pixels prédéfini. Les calculs de l'étape 102 peuvent ainsi se révéler fastidieux au vu du nombre de pixels de l'écran.

L'invention vient améliorer la situation en proposant un procédé d'affichage numérique sur un écran d'un terminal d'une image représentant un ensemble d'objets vus depuis un point de vue défini par des paramètres de navigation. Au moins un objet est paramétré au moins par des coordonnées bidimensionnelles de points d'un polygone. Pour au moins un point du polygone, dit point courant, on calcule une aire d'un triangle comportant ce point courant et les deux points du polygone adjacents à ce point. On estime également un coefficient de proximité à partir d'au moins une de ces coordonnées bidimensionnelles et des paramètres de navigation. On compare l'aire calculée à un seuil, en tenant compte de ce coefficient de proximité. Selon le résultat de la comparaison, ce point courant est conservé ou éliminé pour le calcul d'une représentation de l'ensemble d'objets selon ces paramètres de navigation. Cette représentation est destinée à être affichée sur l'écran.

Ce procédé permet d'éliminer des points dont on peut supposer qu'ils correspondent à des détails. Ainsi, le calcul de représentation, mis en oeuvre par exemple par un moteur 3D, est effectué à partir d'un nombre de points susceptible d'être réduit par rapport à l'art antérieur. Ce calcul de représentation peut ainsi être effectué plus rapidement que dans l'art antérieur. Ce calcul de représentation peut impliquer moins de ressources mémoire et/ou de calcul que dans l'art antérieur.

Avantageusement, le seuil et/ou le coefficient de proximité est déterminé en fonction d'une ou plusieurs caractéristique(s) de l'écran du terminal, par exemple les dimensions de l'écran, le nombre de pixels, ou autre. On peut ainsi éliminer les points dont on suppose qu'ils correspondent à des détails non affichables sur cet écran. Par exemple, le seuil est égal à la surface correspondant à un demi-pixel, ou bien à la surface correspondant à un pixel.

L'invention n'est en rien limitée par cette caractéristique. Par exemple, le seuil peut être choisi arbitrairement, par exemple pour permettre de concilier vitesse d'affichage et niveau de détail. Par exemple, un utilisateur qui ne souhaiterait pas voir s'afficher des détails trop fins peut saisir une valeur correspondant à un seuil, de façon à réduire le nombre de points à partir desquels la représentation est calculée.

Avantageusement, pour un objet donné, on détermine les coordonnées bidimensionnelles d'un point associé au polygone correspondant à cet objet. Par exemple, on calcule à partir des coordonnées bidimensionnelles des points du polygone correspondant les coordonnées bidimensionnelles d'un point centre de polygone. Alternativement, on choisit comme point associé au polygone l'un des points du polygone.

Le coefficient de proximité ensuite estimé à partir des coordonnées de ce point associé à l'objet et des paramètres de navigation. Ainsi, on estime un seul coefficient de proximité pour l'ensemble des points du polygone. Cette approximation permet d'éviter certains calculs, et d'accélérer ainsi le traitement.

Avantageusement, on peut prévoir de comparer le coefficient de proximité à un seuil de proximité, et selon le résultat de la comparaison, calculer un coefficient de proximité pour chaque point du polygone, à partir des coordonnées de ce point et des paramètres de navigation. En effet, si les paramètres de navigation sont tels que l'on peut s'attendre à ce que l'objet apparaisse en premier plan sur l'image, l'approximation consistant à n'estimer qu'un seul coefficient de proximité pour cet objet risque de conduire à des résultats relativement erronés. L'invention n'est en rien limitée par cette optimisation.

Avantageusement, pour un point courant, on détermine, à partir des coordonnées de ce point courant et à partir des paramètres de navigation, des coordonnées du point courant relatives à un repère dans lequel un plan correspondant à l'écran et un point d'observation correspondant à un lieu d'observation supposé ont des coordonnées invariantes avec les paramètres de navigation. Lors de l'étape b/, le coefficient de proximité est estimé à partir de ces coordonnées relatives et à partir des coordonnées dans ce repère de ce point d'observation.

Ainsi, les calculs sont effectués dans un repère particulier, dans lequel un plan correspondant à l'écran et un point d'observation correspondant à un lieu d'observation supposé ont des coordonnées fixes même si les paramètres de navigation varient. Ce choix de repère permet de simplifier les calculs, et donc d'accélérer les traitements.

Bien entendu, l'invention n'est en rien limitée par le repère choisi. On peut par exemple choisir un repère dans lequel ce sont les coordonnées des objets qui sont invariantes avec les paramètres de navigation.

De manière générale, l'invention n'est en rien limitée par le mode de calcul du coefficient de proximité.

Le procédé décrit ci-dessus peut s'appliquer dans le cas de représentations tridimensionnelles, et également dans le cas de représentations bidimensionnelles. Dans ce dernier cas, on peut prévoir que les seules coordonnées spatiales des objets soient les coordonnées bidimensionnelles de points de polygones.

Dans le premier cas, au moins un objet peut être paramétré par en outre une valeur de hauteur. On peut prévoir de déterminer le (ou les) coefficient(s) de proximité associé(s) à un objet à représenter sans tenir compte de la hauteur, de sorte que ce ou ces coefficient est (sont) indépendant(s) de la hauteur de cet objet. La décision de conserver ou d'éliminer un point correspondant à un détail - lequel détail s'étend de fait sur toute la hauteur de l'objet - est indépendante de la hauteur de l'objet.

Suite à la décision de conserver ou éliminer le point courant, on peut constituer une liste des points conservés, cette liste étant destinée à un moteur 3D. En cas de changement d'échelle pour un point de visée plus éloigné, on peut prévoir d'utiliser cette liste de points plutôt que le paramétrage initial, de façon à effectuer un deuxième filtrage sur des points déjà filtrés. Les étapes conduisant à conserver ou éliminer les points sont ainsi effectuées pour moins de points, ce qui permet un traitement plus rapide.

Alternativement, on peut prévoir de toujours partir de la même liste de points initiale, quelque soit le changement d'échelle.

On notera que l'étape d'estimation d'un coefficient de proximité peut intervenir avant l'étape de calcul d'une aire, ou après.

On notera également que l'ordre de traitement des points courants peut avoir une influence sur les points éliminés après filtrage. On peut par exemple, pour un polygone correspondant à une liste de points (P1, ...Pn-1, Pn, Pn+1,...), prévoir de :

- A1/ calculer les aires de tous les triangles formés par un point du polygone et les deux points voisins (soit autant d'aires de triangles que le polygone compte de points),
- B1/ trier les aires calculées par ordre croissant,
- C1/ Pour l'aire de plus faible valeur, cette aire étant inférieure à un seuil :

    - Supprimer le point $P_n$ correspondant, et mettre à jour la liste de points correspondant au polygone (P1, ...Pn-1, Pn+1,...),
    - Calculer les aires des triangles $(P_{n-2}, P_{n-1}, P_{n+1})$ et $(P_{n-1}, P_{n+1}, P_{n+2})$ correspondant aux deux voisins du point supprimé, compte tenu de cette suppression.

On exécute alors à nouveau l'étape B1/ de tri par ordre croissant, compte tenu des aires supprimées et des nouvelles aires calculées, puis l'étape C1/. Les étapes B1/ et C1/ sont ainsi répétées tant qu'il existe une aire inférieure à un seuil, c'est-à-dire jusqu'à ce que l'aire de plus faible valeur ait une valeur supérieure au seuil.

Ce procédé présente l'avantage d'être relativement robuste.

Alternativement, on peut prévoir de :

- A1'/ calculer les aires de tous les triangles formés par un point du polygone et les deux points voisins (soit autant d'aires de triangles que le polygone compte de points),
- B1'/ Supprimer tous les points correspondant à une aire inférieure à un seuil, et mettre à jour la liste de points correspondant au polygone.

On répète les étapes A1'/ et B1'/ jusqu'à ce que toutes les aires calculées soient supérieure au seuil. Ce procédé peut être exécuté relativement rapidement.

Selon un autre aspect, l'invention a pour objet un programme d'ordinateur comprenant des instructions pour mettre en oeuvre les étapes d'un procédé exposé ci-dessus, lors d'une exécution du programme par un processeur. Ce programme d'ordinateur peut par exemple être téléchargé par un terminal, par exemple de type PDA, en vue d'une exécution par un processeur de ce terminal.

Selon encore un autre aspect, l'invention a pour objet un dispositif d'affichage numérique sur un écran d'un terminal d'une image représentant un ensemble d'objets selon un point de vue définie par des paramètres de navigation, au moins un objet de cet ensemble étant paramétré au moins par des coordonnées bidimensionnelles de points d'un polygone. Ce dispositif comprend, pour au moins un point du polygone, dit point courant :

a/ des premiers moyens de traitement agencés pour calculer une aire d'un triangle comportant ce point courant et deux autres points du polygone, ces deux autres points étant adjacents au point courant,

b/ des deuxièmes moyens de traitement pour estimer un coefficient de proximité à partir d'au moins une de ces coordonnées bidimensionnelles et des paramètres de navigation,

c/ des moyens de comparaison pour comparer l'aire calculée à un seuil, en tenant compte du coefficient de proximité, et

d/ des moyens de filtrage reliés aux moyens de comparaison pour, selon le résultat de la comparaison, éliminer ou conserver le point courant d'une liste de points destinée à des moyens de calcul d'une représentation de l'ensemble d'objets à partir des paramètres de navigation, cette représentation étant destinée à être affichée sur l'écran.

Ce dispositif peut être intégré dans un processeur, ou bien encore comprendre un terminal, par exemple un téléphone mobile ou autre.

D'autres caractéristiques et avantages de l'invention apparaîtront encore à la lecture de la description qui va suivre. Celle-ci est purement illustrative et doit être lue en regard des dessins annexés sur lesquels :

- La figure 1, déjà commentée, est un schéma explicatif d'un procédé d'affichage, connu de l'art antérieur ;
- La figure 2 est un organigramme d'un exemple de procédé d'affichage, selon un mode de réalisation de l'invention ;
- La figure 3A est une vue 2D montrant des polygones correspondant à des objets d'un ensemble d'objets, ainsi qu'un point de visée, selon un mode de réalisation de l'invention ;
- La figure 3B montre une représentation 3D susceptible d'être obtenue par un moteur 3D à partir de l'ensemble d'objets de la figure 3A, pour des paramètres de navigation correspondant au point de visée ;
- La figure 3C montre une représentation 3D susceptible d'être obtenue par un dispositif selon un mode de réalisation de l'invention à partir de l'ensemble d'objets de la figure 3A pour des paramètres de navigation correspondant au point de visée ;
- La figure 4 montre un exemple de coordonnées d'un point d'un polygone relativement à un repère particulier ;
- La figure 5 montre un exemple de dispositif selon un mode de réalisation de l'invention ;
- La figure 6A est une vue 2D montrant des polygones correspondant à des objets d'un ensemble d'objets, ainsi que deux champs de vue, selon un mode de réalisation de l'invention ;
- La figure 6B est une représentation 2D correspondant à l'un des champs de vue de la figure 6A, susceptible d'être obtenue par un exemple de procédé selon une réalisation de l'invention ;
- La figure 6C est une représentation 2D de l'ensemble de la figure 6A, susceptible d'être obtenue par un exemple de procédé selon une réalisation de l'invention, suite à un changement d'échelle du point de vue de la figure 6B vers l'autre des points de vue de la figure 6A.

Des références identiques d'une figure à l'autre peuvent être utilisées pour désigner des objets identiques ou similaires.

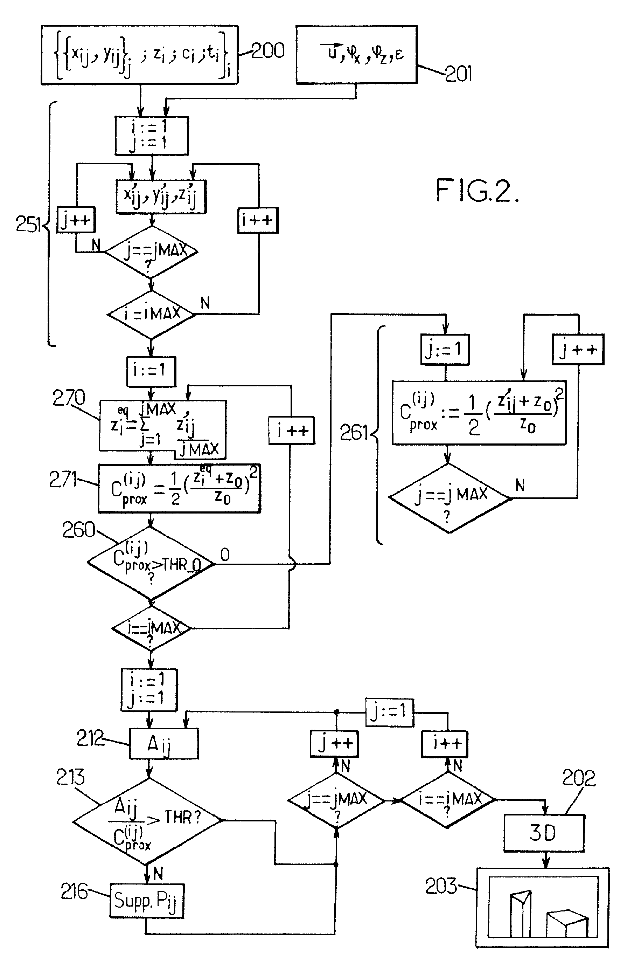

En référence à la figure 2, est représenté un procédé susceptible d'être exécuté par un terminal doté d'un écran, d'une interface utilisateur, de moyens de traitement et de moyens d'accès à un réseau. Les moyens de traitement intègrent un moteur graphique capable de calculer, à partir de coordonnées de points définissant des objets et de paramètres de navigation définissant un point de vue souhaité, une représentation de ces objets comme s'ils étaient vus depuis ce point de vue.

Une liste de données d'image est reçue lors d'une étape 200, par exemple suite à un téléchargement. Pour chaque objet de la liste, la liste comporte une valeur de paramètre de hauteur $z_i$, ainsi que les coordonnées 2D des points d'une base polygonale $x_{i,j}$, $y_{i,j}$, $j$ indiçant les points du polygone. La liste de données d'image peut en outre comprendre des paramètres de vecteurs normaux $\vec{n_i}$ à des surfaces des objets à représenter, des textures $t_i$, des couleurs $c_i$, ou autre.

Des paramètres de navigation 101 définissant le point de vue selon lequel un utilisateur souhaite voir afficher les objets, sont déterminés lors d'une étape 201, à partir de données reçues d'une interface utilisateur.

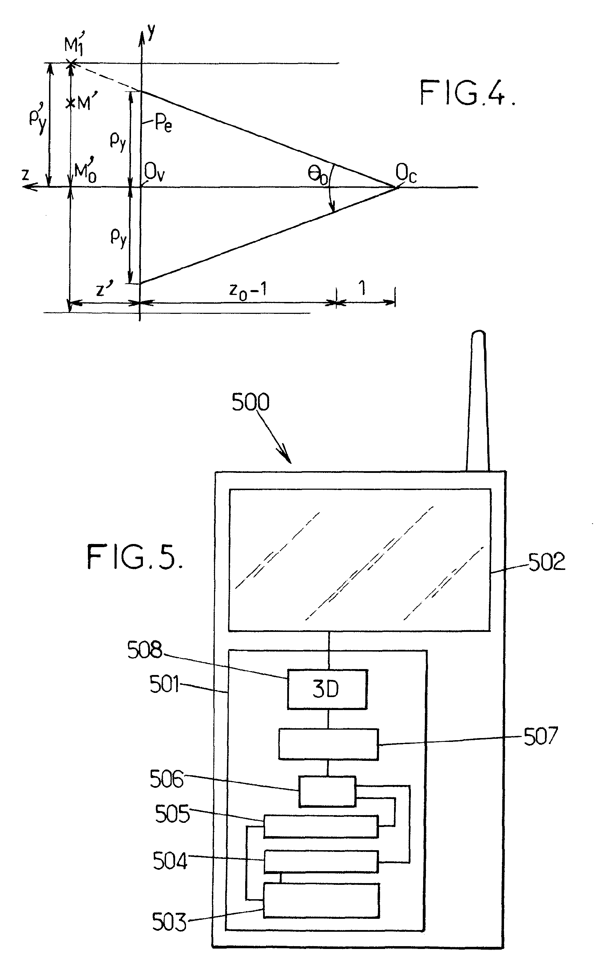

Lors d'une étape 251, on vient déterminer, pour chaque point de la liste de données d'image, des coordonnées de ce point dans un autre repère. Cet autre repère, représenté à la figure 4, est caractérisé en ce que les coordonnées dans ce repère d'un plan $P_e$ et les coordonnées $(0, 0, -z_0)$ d'un point d'observation $O_c$ restent inchangées quels que soient les paramètres de navigation.

Le plan $P_e$ correspond à l'écran du terminal, tandis que le point d'observation $O_c$ correspond à un lieu d'observation supposé, par exemple la position supposée des yeux de l'utilisateur.

Lors de cette étape 251, pour chaque point indicé i,j, les coordonnées x'$_{i,j}$, y'$_{i,j}$, z'$_{i,j}$ relatives à ce repère particulier sont déterminées à partir des coordonnées x$_{i,j}$, y$_{i,j}$, z$_i$, de ce point reçues à l'étape 200 et à partir des paramètres de navigation déterminés lors de l'étape 201. Cette étape 251 peut être mise en oeuvre par des procédés bien connus de l'homme du métier familier des moteurs graphiques.

Des étapes classiques d'initialisation, de test et d'incrémentation sont mises en oeuvre de façon à parcourir l'ensemble des points de la liste de points reçue à l'étape 200.

Puis, pour chaque objet, on détermine lors d'une étape 270 des coordonnées $x_i^{eq}$, $y_i^{eq}$, $z_i^{eq}$ d'un point, à partir des coordonnées x'$_{i,j}$, y'$_{i,j}$, z'$_{i,j}$ des points de la base polygonale correspondant à cet objet. Par exemple, on peut prendre une moyenne de ces coordonnées.

Ces coordonnées équivalentes $x_i^{eq}$, $y_i^{eq}$, $z_i^{eq}$ sont utilisées pour calculer un coefficient de proximité associé à l'objet, lors d'une étape 271. La formule utilisée pour déterminer ce coefficient de proximité $C_{prox}^i$, noté $C_{prox}^{ij}$, sera explicitée en référence à la figure 4.

On compare le coefficient de proximité $C_{prox}^{ij}$ à un seuil THR_0, lors d'un test 260. Si cette comparaison montre que l'objet correspondant à ce coefficient de proximité $C_{prox}^{ij}$ est destiné à occuper une certaine taille de l'écran lors de l'affichage, alors on renonce à cette approximation consistant à déterminer un seul coefficient de proximité pour cet objet. On détermine alors lors d'une étape 261 un coefficient de proximité $C_{prox}^{ij}$ pour chaque point P$_{i,j}$ de la base polygonale correspondant à cet objet. Des étapes classiques d'initialisation, de test et d'incrémentation sont effectuées de façon à parcourir tous les points de cette base polygonale.

Egalement, des étapes classiques d'initialisation, de test et d'incrémentation sont effectuées de façon à appliquer les étapes 270, 271, 260 à tous les objets de la liste de données d'images.

Puis, pour chaque objet, indicé j, et pour chaque point P$_{ij}$, indicé i,j du polygone correspondant à cet objet, on calcule une aire A$_{ij}$ à partir des coordonnées bidimensionnelles x$_{i,j}$, y$_{i,j}$ de ce point, et des coordonnées bidimensionnelles x$_{i,(j-1)}$, y$_{i,(j-1)}$ et x$_{i,(j+1)}$, y$_{i,(j+1)}$ des deux points de la base polygonale adjacents.

La valeur de cette aire donne une indication de l'information associée à ce point : si cette aire est relativement faible, on peut en conclure que le point associé correspond à un détail de l'objet.

Toutefois, on souhaite conserver les détails destinés à apparaître au premier plan lors de l'affichage de la représentation des objets.

Aussi cette aire A$_{ij}$ est-elle comparée à un seuil, en tenant compte du coefficient de proximité $C_{prox}^{ij}$ correspondant à cet objet ou à ce point le cas échéant.

Dans cet exemple, le seuil THR est choisi égal à 1. C'est le coefficient de proximité qui est déterminé en tenant compte de l'aire occupée par un pixel sur l'écran.

Si cette comparaison, lors de l'étape 213, montre que ce point P$_{jj}$ correspond à une information susceptible d'être éliminée du fait de l'impossibilité d'afficher des informations correspondant à une taille sur l'écran trop faible, ici, un demi pixel, alors le point P$_{ij}$ est supprimé, lors d'une étape 216, d'une liste de points à partir desquels un moteur graphique calcule, compte tenu des paramètres de navigation, une représentation à afficher.

Cette étape 202 de calcul intervient seulement lorsque les étapes 212 et 213 ont été appliquées à tous les points de tous les objets de la liste reçue à l'étape 200. Des étapes classiques d'initialisation, de test et d'incrémentation sont effectuées de façon à parcourir tous ces points.

Ainsi, l'étape de calcul 212 est-elle effectuée à partir d'une liste de points correspondant à des informations affichables à l'écran. Cette liste est susceptible d'être plus réduite que la liste de l'étape 200, de sorte que ce procédé permet d'accélérer les calculs de l'étape 212, pour une qualité d'affichage équivalente.

Enfin, la représentation calculée par le moteur graphique est affichée sur l'écran du terminal, lors d'une étape 203.

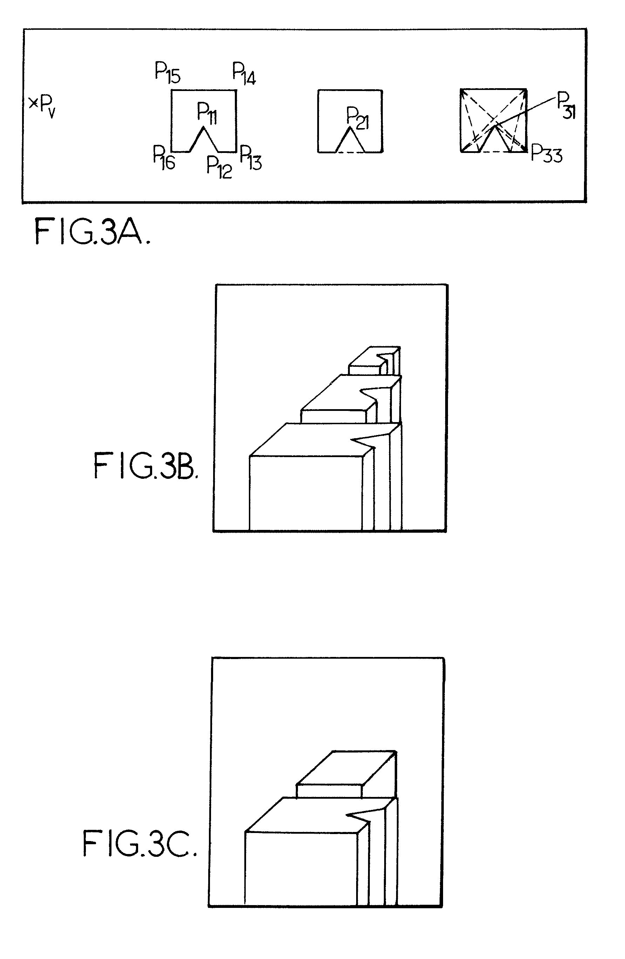

En référence à la figure 3A, sont représentés trois objets, correspondant par exemple à des immeubles, vus de haut, et également un point de visée P$_V$ dont la position correspond à la position que devrait occuper un dispositif d'acquisition d'image, par exemple une caméra, pour obtenir la vue souhaitée.

Chacun des trois immeubles est paramétré par un paramètre de hauteur, et par des coordonnées bidimensionnelles des points d'un heptagone. Pour chaque immeuble, certains points P$_{16}$, P$_{11}$, P$_{12}$, P$_{26}$, P$_{21}$, P$_{22}$, P$_{36}$, P$_{31}$, P$_{32}$ correspondent à une information de détail.

Un moteur graphique calculerait à partir de cet ensemble de points, selon un procédé connu de l'art antérieur, la représentation montrée à la figure 3B. Toutefois, du fait des contraintes d'affichage, certains détails de l'image de la figure 3B ne pourraient être affichés sur un écran, en particulier sur un écran d'un terminal mobile possédant un nombre relativement restreint de pixels. Le calcul aboutissant à la représentation de la figure 3B est donc relativement fastidieux, puisque certains détails sont destinés à être supprimés avant affichage.

En appliquant, préalablement aux calculs d'une représentation, le procédé décrit ci-dessus, on supprime certains points des heptagones correspondants aux immeubles. Dans cet exemple, ce procédé conduit à :

- conserver tous les points de l'immeuble pour lequel j=1, cet objet étant destiné à apparaitre en premier plan de la représentation,
- éliminer le point $P_{21}$ de la liste. En effet, ce point $P_{21}$ correspond à une aire (représentée sur la figure 3A, à des fins explicatives) trop faible compte tenu des paramètres de navigation. Les points $P_{26}$, $P_{22}$ sont également susceptibles d'être éliminés. Aussi, le deuxième immeuble, pour lequel j=2, correspond à un cylindre à base carrée sur la représentation, comme le montre la figure 3C,
- éliminer tous les points du troisième immeuble, pour lequel j=3. En effet, ces points $P_{3j}$ correspondent à des aires (représentées sur la figure 3A, à des fins explicatives) trop faibles compte tenu des paramètres de navigation, de sorte que cet immeuble n'apparaît pas sur la représentation.

La représentation de la figure 3C a donc été calculée avec un nombre de points réduit par rapport à la représentation de la figure 3B.

La figure 4 montre un exemple de coordonnées d'un point d'un polygone relativement à un repère particulier.

On suppose que le repère $(O_v; \vec{i}, \vec{j}, \vec{k})$ est orthonormé direct. L'angle $\theta_o$ correspond à l'angle de vision d'un utilisateur supposé.

Le rectangle $[-\rho_x, +\rho_x] \times [-\rho_y, +\rho_y] \times \{0\}$ du plan $P_e$ correspond à la position et aux dimensions de l'écran. Par conséquent, ce rectangle est contenu dans le plan $[z = 0]$ et contient le point d'origine $O_v$.

L'étape 251 sur la figure 2 permet d'obtenir des coordonnées de points des objets qui sont relatives à ce repère. Les coordonnées ainsi obtenues (x',y',z') sont situés dans le demi espace défini par z positif (point M'). On peut déterminer la représentation correspondant à ces coordonnes relatives en effectuant une projection de ces coordonnées dans le plan défini par z=0.

On suppose que les valeurs $\rho_x$, $\rho_y$ sont normalisées en nombre de pixels, c'est à dire que la hauteur et la largeur u=1 d'un pixel s'écrit $u = \rho_x / 2\omega = \rho_y / 2h$, où w et h sont les nombres de pixels sur la largeur de l'écran et sur la hauteur de l'écran respectivement.

Si l'on se place dans le plan $[z = z']$, on peut chercher à déterminer la hauteur et la largeur dans ce plan $[z = z']$ qui correspondraient à la largeur et la hauteur d'un pixel dans le plan de l'écran :

$$u' = \frac{\rho_y^{'}}{2h} = \frac{\rho_x^{'}}{2w}$$

En appliquant le théorème de Thalès dans le triangle $M_1'M_o'O_c$ :

$$\frac{\rho_y^{'}}{\rho_y} = \left| \frac{z' + z_0}{z_0} \right|.$$

Soit :

$$u' = \frac{\rho_y^{'}}{2h} = \frac{\rho_y}{2h} * \frac{\rho_y^{'}}{\rho_y} = \left| \frac{z' + z_0}{z_0} \right|.u$$

La valeur de u étant normalisée à 1, on en déduit que l'aire dans le plan $[z = z']$ qui correspond à l'aire d'un demi pixel dans le plan de l'écran peut s'écrire :

$$\frac{u'^2}{2} = \frac{1}{2}(\frac{z' + z_0}{z_0})^2$$

L'étape 213 dans l'algorithme de la figure 2 revient à comparer l'aire d'un triangle à un coefficient de proximité correspondant à la surface d'un demi pixel. Aussi choisit-t-on ce coefficient de proximité égal à $\frac{1}{2}(\frac{z_{i,j}^{'} + z_0}{z_0})^2$, ou bien à $\frac{1}{2}(\frac{z_i^{eq} + z_0}{z_0})^2$ le cas échéant.

Par ailleurs, lors qu'un utilisateur d'une application de visualisation 3D navigue, il peut effectuer un nombre limité d'opérations : se déplacer, incliner la représentation affichée, tourner autour de la représentation affichée, zoomer. Ces quatre opérations se définissent respectivement par une translation T d'un vecteur $\vec{u}$, une rotation $R_x$ autour de l'axe des x d'angle $\varphi_x$, une rotation $R_z$ autour de l'axe des z d'angle $\varphi_z$, et une homothétie H de rapport $\varepsilon$.

Au cours de la navigation, pour un point de coordonnées $x_{i,j}$, $y_{i,j}$, $z_i$, on détermine des coordonnées $x'_{i,j}$, $y'_{i,j}$, $z'_{i,j}$ relatives au repère de la figure 4 en tenant compte de ces paramètres de navigation $\vec{u}$, $\varphi_x$, $\varphi_z$ et $\varepsilon$.

Le coefficient de proximité dépend à la fois des coordonnées $x_{i,j}$, $y_{i,j}$, $z_i$ et des paramètres de navigation $\vec{u}$, $\varphi_x$, $\varphi_z$ et $\varepsilon$.

En référence à la figure 5, un terminal 500 comprend un dispositif d'affichage numérique 501, par exemple un processeur relativement pauvre en ressources mémoire et/ou de calcul, un écran 502 avec un nombre de pixels relativement réduit et une antenne.

Le processeur 500 comporte des moyens de réception 503 de coordonnées des points d'un ensemble d'objets.

Des premiers moyens de traitement, représentés sous la référence 504, permettent de calculer des aires de triangles à partir des coordonnées bidimensionnelles de trois points successifs d'une base polygonale d'un objet.

Des deuxièmes moyens de traitement 505 permettent d'estimer un coefficient de proximité pour chaque objet, ou pour chaque point d'un objet donné le cas échéant.

Des moyens de comparaison 506 permettent de comparer l'aire reçue des moyens de traitement 504 à un seuil, compte tenu du coefficient de proximité reçu des moyens de traitement 505.

Des moyens de filtrage 507 reliés aux moyens de comparaison 506 permettent d'établir une liste de points à envoyer à des moyens de calculs 508, par suppression de certains points de la liste de points reçue par les moyens de réception 503.

Les moyens de calcul 508 peuvent comprendre un moteur graphique du type connu de l'art antérieur.

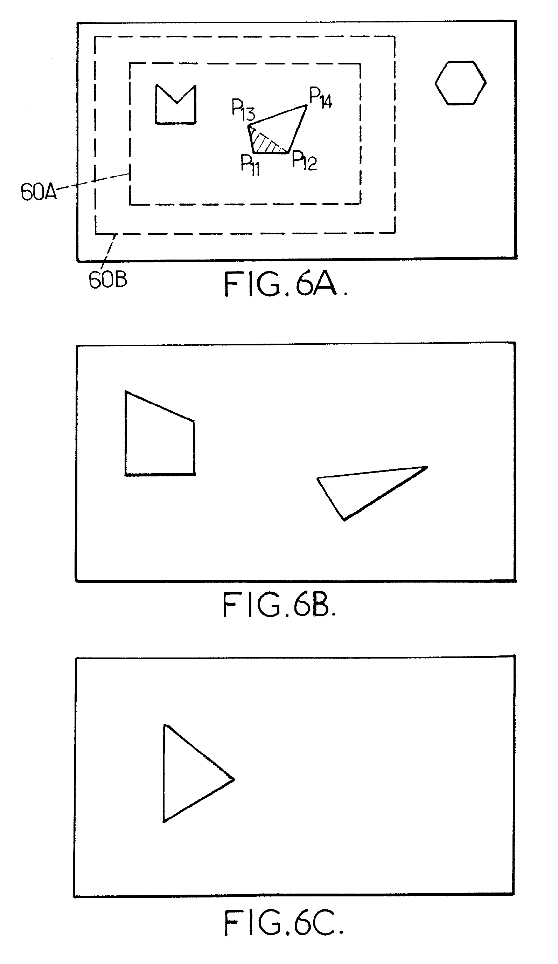

En référence à la figure 6A, sont représentés trois objets, correspondant par exemple à des immeubles, vus de haut. Sont en outre représentés en pointillés deux champs de vue 60A, 60B souhaités, correspondant l'un et l'autre à des vues que l'on pourrait obtenir avec une caméra placée en hauteur et avec une orientation à 90˚ par rapport au plan du sol.

Dans cet exemple, les objets à représenter sont bidimensionnels, et sont paramétrés par des données bidimensionnelles.

La figure 6B est une représentation 2D correspondant à l'un des champs de vue 60A de la figure 6A, susceptible d'être obtenue par un exemple de procédé selon une réalisation de l'invention. Cette représentation est obtenue à partir d'une liste de points réduite par rapport à la liste de points correspondant aux deux objets de la figure 6A qui sont situés dans le champ de vue 60A. Par exemple le point $P_{11}$ correspond à une aire (représentée en hachurée sur la figure 6A, à des fins explicatives) trop faible compte tenu de l'échelle du champ de vue 60A, et a été éliminé.

Si l'utilisateur souhaite passer du champ de vue 60A au champ de vue 60B, alors de nouveaux paramètres de navigation sont reçus et comparés aux paramètres de navigation courants.

Si cette comparaison, effectuée selon des procédés bien connus de l'homme du métier montre, comme c'est le cas ici, qu'il s'agit d'un simple changement d'échelle (de zoom), alors on peut appliquer les étapes du procédé décrit ci-dessus non pas à la liste complète des points correspondant aux deux objets de la figure 6A qui sont situés dans le champ de vue 60B, mais à la liste réduite déjà obtenue préalablement à l'obtention de la représentation de la figure 6B.

On peut ainsi accélérer encore le traitement. La figure 6C est une représentation 2D de l'ensemble de la figure 6A, avec le champ de vue 60B. On constate que cette représentation a été obtenue avec une liste de points encore plus réduite que la liste de points correspondant à la figure 6B.

## Revendications

**1.** Dispositif d'affichage numérique (501) sur un écran (502) d'un terminal (500) d'une image représentant un ensemble d'objets d'un point de vue défini par des paramètres de navigation, au moins un objet dudit ensemble étant paramétré au moins par des coordonnées bidimensionnelles de points d'un polygone, ledit dispositif comprenant, pour au moins un point courant du polygone :

> a/ des premiers moyens de traitement (504) agencés pour calculer une aire d'un triangle comportant ledit point courant et deux autres points du polygone, lesdits deux autres points étant adjacents audit point courant,
> b/ des deuxièmes moyens de traitement (505) pour estimer un coefficient de proximité à partir des coordonnées bidimensionnelles d'au moins un point du polygone et des paramètres de navigation,
> c/ des moyens de comparaison (506) pour comparer l'aire calculée à un seuil, en tenant compte du coefficient de proximité, et
> d/ des moyens de filtrage (507) reliés aux moyens de comparaison pour, selon le résultat de la comparaison, éliminer ou conserver ledit point courant d'une liste de points destinée à des moyens de calcul (508) d'une représentation de l'ensemble d'objets selon les paramètres de navigation, ladite représentation étant destinée à être affichée sur l'écran.

**2.** Procédé d'affichage numérique sur un écran d'un terminal d'une image représentant un ensemble d'objets d'un point de vue défini par des paramètres de navigation, au moins un objet dudit ensemble étant paramétré au moins par des coordonnées bidimensionnelles de points d'un polygone, ledit procédé comprenant, pour au moins un point courant du polygone :

> a/ calcul (212) d'une aire d'un triangle comportant ledit point courant et deux points du polygone adjacents audit point courant,
> b/ estimation (211) d'un coefficient de proximité à partir des coordonnées bidimensionnelles d'au moins un point du polygone et des paramètres de navigation,
> c/ comparaison (213) de l'aire calculée à un seuil, en tenant compte dudit coefficient de proximité,
> d/ filtrage pour conserver ou éliminer (216), selon le résultat de la comparaison, ledit point courant pour le calcul d'une représentation (202), destinée à être affichée sur l'écran (203), de l'ensemble d'objets selon les paramètres de navigation.

3. Procédé d'affichage selon la revendication 2, dans lequel
l'un au moins parmi le seuil (THR) et le coefficient de proximité est déterminé en fonction d'au moins une caractéristique de l'écran du terminal.

4. Procédé d'affichage selon la revendication 3, dans lequel
le seuil (THR) est égal à la moitié de la surface correspondant à un pixel sur l'écran.

5. Procédé d'affichage selon l'une des revendications 2 à 4, comprenant, pour au moins un objet,
déterminer (270), à partir des coordonnées bidimensionnelles d'au moins un point du polygone correspondant audit objet, les coordonnées bidimensionnelles d'un point associé audit polygone,
et, lors de l'étape b/, estimer (271) le coefficient de proximité à partir des coordonnées dudit point associé au polygone et des paramètres de navigation.

6. Procédé d'affichage selon la revendication 5, comprenant, pour ledit au moins un objet,
comparer (260) le coefficient de proximité à un seuil de proximité, et selon le résultat de la comparaison, estimer (261) un coefficient de proximité pour chaque point du polygone, à partir des coordonnées de ce point et des paramètres de navigation.

7. Procédé d'affichage selon l'une des revendications 2 à 6, comprenant, pour ledit point courant
déterminer (251), à partir des coordonnées dudit point courant et à partir des paramètres de navigation, des coordonnées dudit point courant relatives à un repère dans lequel un plan correspondant à l'écran et un point d'observation correspondant à un lieu d'observation supposé sont invariants avec les paramètres de navigation,
et dans lequel, lors de l'étape b/, le coefficient de proximité est estimé à partir desdites coordonnées relatives et à partir des coordonnées dans ledit repère dudit point d'observation.

8. Procédé d'affichage selon l'une des revendications 2 à 7, dans lequel
au moins un objet de l'ensemble d'objets est paramétré au moins par des coordonnées bidimensionnelles de points d'un polygone et par une valeur de hauteur.

9. Procédé d'affichage selon l'une des revendications 2 à 8,
dans lequel, à l'étape d/ de filtrage, le point courant est conservé ou éliminé d'une liste de points destinée au calcul de la représentation de l'ensemble d'objets,
**caractérisé en ce que**, en cas de réception de nouveaux paramètres de navigation correspondant à un changement d'échelle, le procédé comprend une comparaison entre les paramètres de navigation courants et les paramètres de navigation reçus, et selon le résultat de la comparaison, utilisation de la liste de points lors de l'exécution des étapes a/, b/, c/ et d/.

10. Programme d'ordinateur comprenant des instructions pour mettre en oeuvre les étapes d'un procédé selon l'une des revendications 2 à 9 lors d'une exécution du programme par des moyens de traitement.

FIG.1.
ART ANTÉRIEUR

## FIG.2.

$\left\{ \left\{ x_{ij}, y_{ij} \right\}_j ; z_i ; c_i ; t_i \right\}_i$ —200

$\vec{u}, \psi_x, \psi_z, \varepsilon$ —201

$\begin{array}{l} i := 1 \\ j := 1 \end{array}$

$x'_{ij}, y'_{ij}, z'_{ij}$

251

j++

i++

$\underset{?}{j == jMAX}$  N

$\underset{?}{i == iMAX}$  N

$i := 1$

270 — $z_i^{eq} := \sum_{j=1}^{jMAX} \frac{z'_{ij}}{jMAX}$

i++

271 — $C_{prox}^{(ij)} = \frac{1}{2} \left( \frac{z_i^{eq} + z_0}{z_0} \right)^2$

260 — $\underset{?}{C_{prox}^{(ij)} > THR\_0}$  0

$j := 1$

j++

261 — $C_{prox}^{(ij)} := \frac{1}{2} \left( \frac{z'_{ij} + z_0}{z_0} \right)^2$

$\underset{?}{j == jMAX}$  N

$\underset{?}{i == iMAX}$

$\begin{array}{l} i := 1 \\ j := 1 \end{array}$

j := 1

212 — $A_{ij}$

j++   i++

213 — $\underset{?}{\dfrac{A_{ij}}{C_{prox}^{(ij)}} > THR}$

$\underset{?}{j == jMAX}$  N   $\underset{?}{i == jMAX}$  N

202

3D

216 — Supp. $P_{ij}$

203

FIG.3A.

FIG.3B.

FIG.3C.

FIG.4.

FIG.5.

FIG.6A.

FIG.6B.

FIG.6C.

Europäisches
Patentamt

European
Patent Office

Office européen
des brevets

**RAPPORT DE RECHERCHE EUROPEENNE**

Numéro de la demande

EP 09 17 7394

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2008/003687 A (NEWSCAPE TECHNOLOGY [FR]; REY ALAIN [FR]) 10 janvier 2008 (2008-01-10) * abrégé * * page 1, ligne 24 - ligne 29 * * page 2, ligne 5 - ligne 11 * * page 5, ligne 8 - ligne 22 * * page 8, ligne 25 - ligne 32 * * page 11, ligne 5 - ligne 24 * * figures 3, 4a-4g, 9, 12, 13 * ----- | 1-10 | INV. G06T15/10 ADD. G06T17/40 |
| Y | REDDY M: "SCROOGE: Perceptually-Driven Polygon REduction" 31 décembre 1996 (1996-12-31), COMPUTER GRAPHICS FORUM BLACKWELL PUBLISHERS FOR EUROGRAPHICS ASSOC UK, VOL. 15, NR. 4, PAGE(S) 191 - 203 , XP002534520 ISSN: 0167-7055 * page 191, colonne de gauche, ligne 17 - colonne de droite, ligne 6 * * page 191 - colonne de droite * * abrégé * ----- | 1-10 | |
| Y | Cote, Paul: "PUBLIC INFRASTRUCTURE FOR VIRTUAL CITIES: A PRACTICALFRAMEWORK FOR A COLLABORATIVELY DEVELOPED, MULTI-PURPOSE 3D MODEL OF THE METROPOLIS" 21 juin 2006 (2006-06-21), pages 1-19, XP002534521 Extrait de l'Internet: URL:http://www.gsd.harvard.edu/pbcote/rese arch/metromodel/metromodel.pdf> [extrait le 2009-06-10] * abrégé * * page 10,moitié inférieure "Distance Dependent" * * figures 1, 3-6 ,8-11 * ----- -/-- | 1-10 | DOMAINES TECHNIQUES RECHERCHES (IPC) G06T |

Le présent rapport a été établi pour toutes les revendications

| Lieu de la recherche | Date d'achèvement de la recherche | Examinateur |
|---|---|---|
| Berlin | 19 mars 2010 | Vollmann, Karl |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 09 17 7394

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DOUGLAS D H ET AL: "ALGORITHMS FOR THE REDUCTION OF THE NUMBER OF POINTS REQUIRED TO REPRESENT A DIGITIZED LINE OR ITS CARICATURE" CANADIAN CARTOGRAPHER, YORK UNIVERSITY, DOWNSVIEW, CA, vol. 10, no. 2, 1 janvier 1973 (1973-01-01), pages 112-122, XP009005710 ISSN: 0008-3127 * abrégé * * figures 1,5,6 * | 1-10 | |
| A | KU K-M ET AL: "Polygonal approximation of digital curve by graduate iterative merging" ELECTRONICS LETTERS, IEE STEVENAGE, GB, vol. 31, no. 6, 16 mars 1995 (1995-03-16), pages 444-446, XP006002577 ISSN: 0013-5194 * page 445 * | 1-10 | |
|  |  |  | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Berlin | 19 mars 2010 | Vollmann, Karl |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

 ...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 7394

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-03-2010

| Document brevet cité<br>au rapport de recherche | Date de<br>publication | Membre(s) de la<br>famille de brevet(s) | Date de<br>publication |
|---|---|---|---|
| WO 2008003687 A | 10-01-2008 | EP 2036048 A1<br>FR 2903518 A1 | 18-03-2009<br>11-01-2008 |

EPO FORM P0460

Pour tout renseignement concernant cette annexe : voir Journal Officiel de l'Office européen des brevets, No.12/82